# EUROPEAN PATENT APPLICATION

(11) **EP 1 062 881 A2**
(43) Date of publication of application: **27.12.2000**
(21) Application number: 00610064.8
(22) Date of filing: 22.06.2000
(51) Int. Cl.: A23N 12/02

(54) **Apparatus for cleaning beets of earth**

(30) Priority: 25.06.1999 DK 91499
(71) Applicant: DANISCO A/S, 1001 Copenhagen K. (DK)
(72) Inventor: Hansen, Franck Bern, 4900 Nakskov (DK); Jorgensen, Lars Bo, 4800 Nykobing Falster (DK); Hansen, Ole, 4900 Nakskov (DK)
(74) Representative: Lichtenberg, Erik

(57) **Abstract**

An apparatus (12) is provided which comprises rotating brushes (1) for cleaning beets (6, 7) of earth (33). The apparatus (12) comprises a frame (13) with a substantially horizontal table (14). The beets rest on a surface of a two-dimensional arrangement of upwardly pointed brushes (1), which project from the surface of the table (14), and which are secured on shafts (15) rotatably arranged at such intervals that the beets (6, 7) can both rest on the tips of the brushes (1) and enter the space between said brushes which are caused to rotate. As a result the brushes (1) can efficiently reach into the beet furrows and clean said beets efficiently of earth.

## Description

The invention relates to an apparatus with rotating brushes for cleaning beets of earth.

Such an apparatus is known from the description of South African patent No. ZA 8903100. This apparatus comprises a pair of cylindrical brushes with radially projecting bristles secured on a pair of rotating horizontal shafts in such a manner that the tips of the bristles of one brush in the pair of brushes present a short distance to or abut the tips of the bristles of the other brush in the pair of brushes. Driving means are provided for causing the brushes to rotate, said driving means being connected to the brushes and adapted to drive said brushes in opposing directions in such a manner that a squeezing area is provided between the bristles of the brushes. In addition a protecting housing is provided which at least partially surrounds the brushes. This housing comprises an inlet opening providing access for root vegetables to be cleaned so as to be advanced to the squeezing area. This apparatus is shaped as an apparatus for dry-cleaning root vegetables, but according to an additional embodiment it can be supplemented with water feeding means in form of nozzles discharging water under pressure. The latter embodiment implies that the resulting dry-cleaning is supplemented with a flushing of the root vegetables.

The object of the present invention is to provide an apparatus for cleaning root vegetables, first of all beets, in particular sugar beets, without a feeding of water.

It is, of course, desired to clean the beets of as much earth as possible while avoiding a considerable damaging of said beets in form of a peeling off of the peel and beet material.

The hitherto known brushing apparatuses for brushing off earth from sugar beets show that the earth found in the root furrows of the beets cannot be removed without damaging said beets.

Accordingly, the object of the invention is as stated above to provide an apparatus for efficiently brushing off earth from beets without causing a significant damage thereto.

This object is according to the invention obtained by the apparatus described above comprising a frame with a substantially horizontal table, where a two-dimensional arrangement of upwardly pointed brushes project from the surface of said table, said brushes being secured to upwardly extending and rotatably arranged shafts at such intervals that the beets can both rest on the tips of the brushes and enter the spaces between said brushes which are caused to rotate by means of driving means connected to said shafts.

The weight of the beets alone provide a suitable pressure between the upwardly pointed brushes and the various beet surfaces in such a manner that said brushes can reach into the root furrows and behind the side roots when the beets are moved around on the tips of the brushes during operation of the apparatus where the brushes are caused to rotate. As a result a very high degree of cleaning is obtained, said cleaning being measured in the manner indicated above.

The apparatus is particularly efficient when abutting brushes do not all rotate in the same direction, said brushes forming a space for a beet, cf. the subject matter of claim 2.

As stated in claim 3, the arrangement of the brushes forms preferably such a pattern that each of the above spaces is formed by three brushes, the shafts of which substantially form the vertices of a equilateral triangle.

When the driving means are arranged as stated in claim 4, viz. below the surface of the table, it is possible to protect said driving means against penetration of earth cleaned off.

As stated in claim 5, the driving means may be formed by chain drives surrounding sprockets on the shafts.

As stated in claim 6, the driving means may optionally be formed by driving belts, especially toothed belts extending around toothed pulleys and belt pulleys, respectively, on the shafts.

During the operation of the apparatus, large quantities of earth are collected on the surface of the table. Accordingly, the shafts and/or the brushes are advantageously provided with radially projecting ejection means for earth cleaned off the beets as stated in claim 7. It should be noted that the term "brushes" is to be construed so as to include both a brush bottom and bristles secured thereon. Thus the ejection means are first of all secured to the brush bottom.

So as to make the apparatus according to the invention suited not only for use in connection with cleaning of a quantity of beets, but also for a continuous processing of said beets, the apparatus is as stated in claim 8 provided with a feeding chute (??) for beets to be cleaned, and an outlet chute for the cleaned beets, said beets during the stay in and the passage through the apparatus being retained by means of side members projecting upwards along the long sides and spaced from the lower edge of the table. The earth cleaned off can be removed from the table in the area between the lower edge of the side member and the table, said earth being removable by means of the ejection means as stated above.

The subject matter of claim 9 renders it possible to obtain an increase of the cleaning degree as the brushing means while kept in contact with the top side of the beets are capable of applying a higher pressure between the top side of the brushes and the bottom side of the beets than gravity alone. In addition, the said brushing means also assist in an additional cleaning of the top sides of the beets while simultaneously causing a turning or reorientation of said beets.

As stated in claim 10, it is possible to provide the desired movement of the brushing means abutting the beets in the moving direction of said beets and the subsequent lifting and returning in the opposite direction as well as lowering into contact with the beets and the movement in the moving direction of said beets by means of a power-driven eccentric mechanism.

The invention is explained in greater detail below with reference to the accompanying drawings, in which
Figure 1 shows a flow sheet illustrating how two beets of a highly different size can rest on brushes included in the apparatus according to the invention,
Figure 2 shows another flow sheet illustrating corresponding beets resting on pointed rotating brushes while a brushing means above said brushes can be kept in contact with the top side of the beets while carrying out a circular movement on a vertical plane,
Figure 3 is a perspective view of an apparatus according to the invention for a continuous processing of the beets,
Figure 4 is a bottom view of the driving means for one of the four sections shown on the apparatus of Figure 3,
Figure 5 illustrates a portion of the table with two pointed brushes provided with ejection means on the brush bottom, said ejection means ejecting earth cleaned off the beets,
Figure 6 is a top view of a plurality of pointed brushes also provided with ejection means on some of the brush bottoms of said brushes,
Figure 7 is a sectional view of a table with a pair of upwardly projecting pointed brushes which are secured on rotatably arranged shafts with ejection means for earth cleaned off the beets, and
Figure 8 is a corresponding top view of brushes provided with ejection means projecting radially from the shafts of the brushes and being used for ejecting the earth cleaned off the beets.

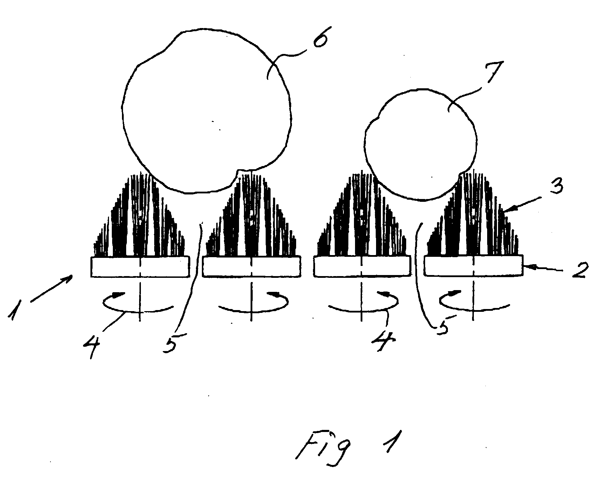

Figure 1 shows a flow sheet of four brushes 1, each brush comprising a brush bottom 2 and bristles 3. As indicated by means of arrows 4, the brushes 1 are adapted to rotate in alternate directions. As also shown, the brushes are mutually spaced in such a manner that beets 6, 7 of a varying size can both rest on the tips of the brushes and enter the space 5 between said brushes.

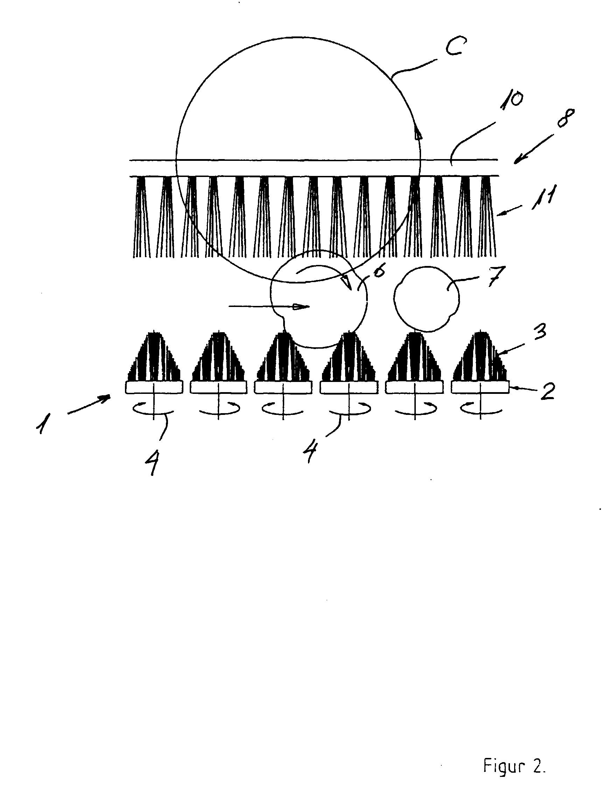

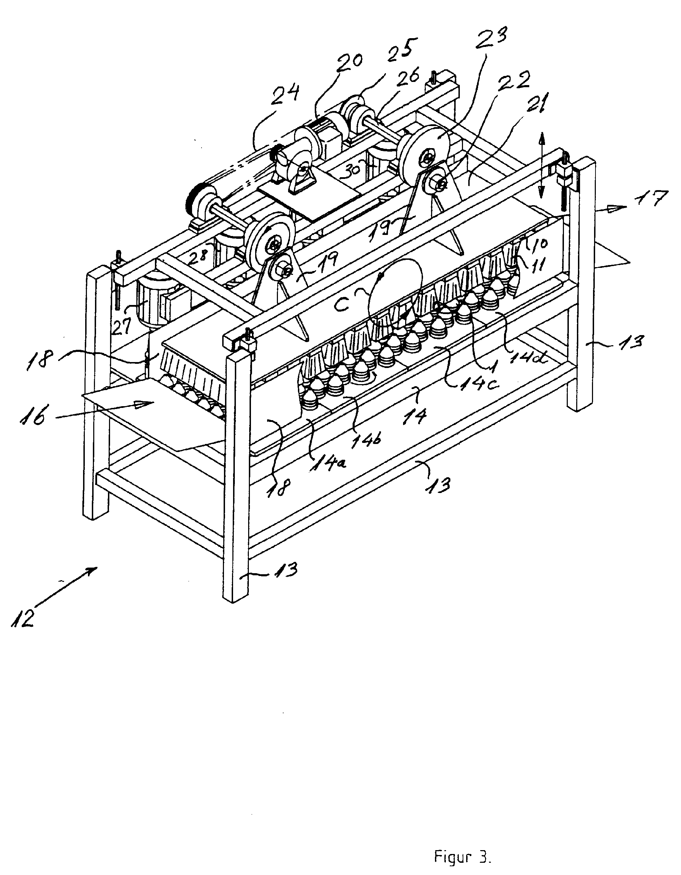

The corresponding parts are in Figure 2 indicated by the safe reference numerals. In addition to the matter described in Figure 1, Figure 2 also shows a brushing means 8 extending over all the brushes 1. This brushing means 8 can be kept in contact with the top side of the beets 6, 7 and carry out a circular movement C on the vertical plane, cf. the explanation following in connection with Figure 3.

Correspondingly, the brushing means 8 comprises a brush bottom 10 and bristles 11. Such a brushing means is for instance shaped as a besom known per se.

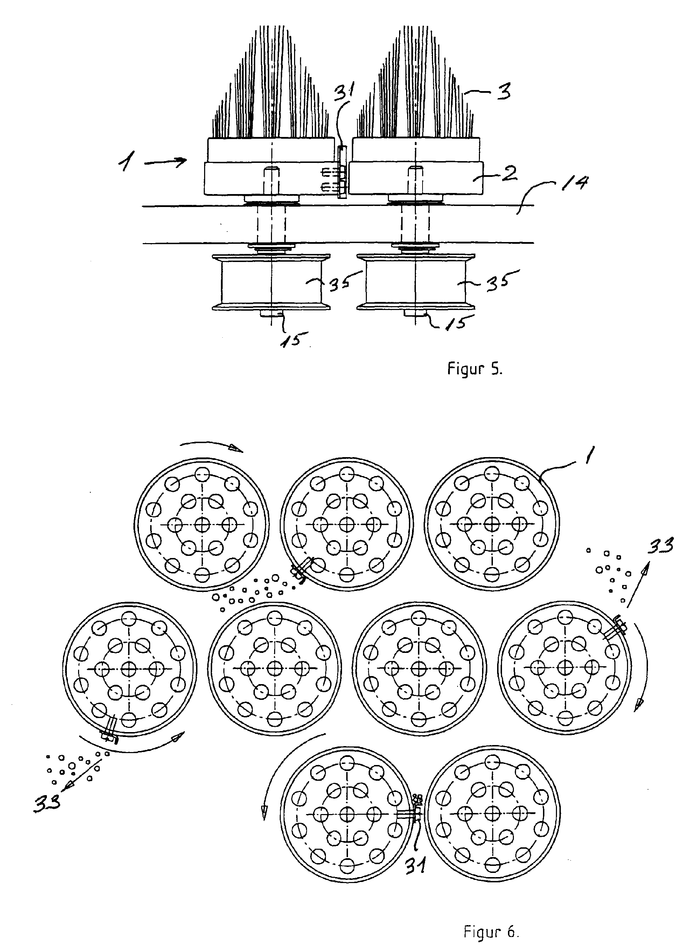

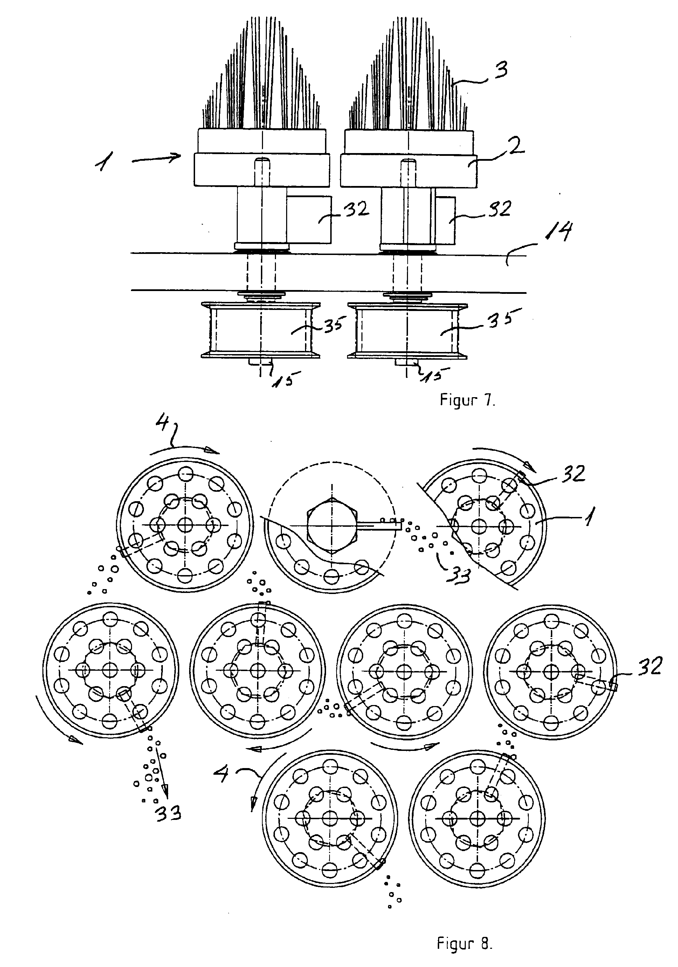

Figure 3 illustrates an apparatus 12 comprising a frame, the various members of which are designated the reference numeral 13. A table 14 is secured to the frame, said table in the shown embodiment comprising four sections 14a, 14b, 14c and 14d. A two-dimensional arrangement of upwardly pointed brushes 1 extend from the surface of this table 14. Each brush is secured on shafts 15 projecting upwardly from the surface of the table 14 and being rotatably arranged, cf. Figures 5 and 7. The distance between the brushes 1 has been discussed previously in connection with Figures 1 and 2.

Figure 3 shows furthermore a feeding chute 16 for beets as well as an outlet chute 17 for said beets. The table 14 is rectangular and provided with side members 18 along the long sides. The ends of the front side member are shown, the middle portion of said side member being removed so as to show the brushes 1 and the brushing means 10, 11 positioned within said side member.

At the top the frame 13 is connected to an eccentric mechanism 19 which can be driven by means of a motor 20. The eccentric mechanism 19 comprises a plate 21 carrying a plurality of the above brushing means 8. The eccentric mechanism 19 is pivotally secured by means of a bolt or a pin 22 to a wheel 23 driven by the motor 20 by means of belt drives 24 and pulleys 25 through shafts 26. As a result the brushing means 8 can be kept in contact with the top side of beets 6, 7 passing through the apparatus. Thus the brushing means 8 are moved by means of the moving mechanism 19 into contact with the beets in the moving direction of said beets in a direction from the feeding chute 16 towards the outlet chute 17. Subsequently the moving mechanism 19 lifts the brushing means 8 and moves them in opposite direction out of contact with said beets so as finally to lower said brushing means 8 again into contact with the beets 6, 7 and so as to move in the moving direction of said beets 6, 7.

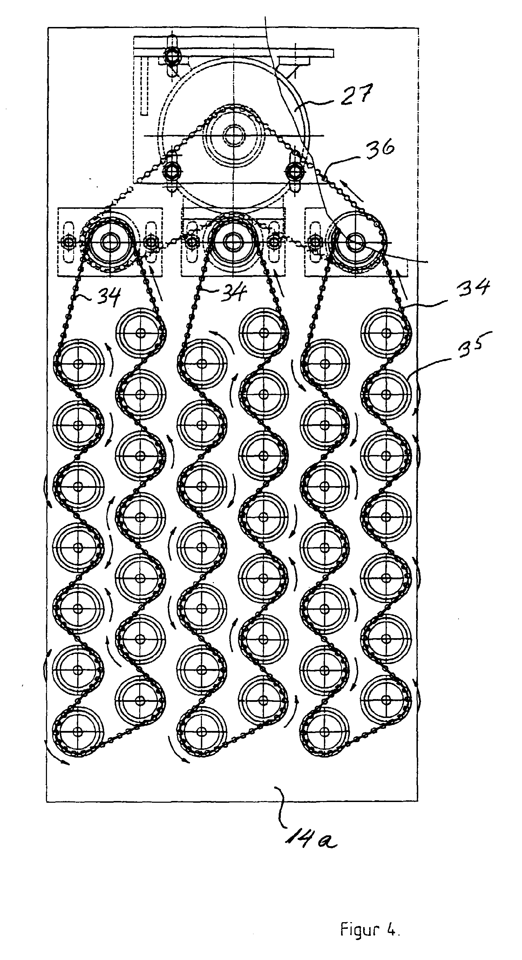

The apparatus 12 also includes four other motors 27 to 30, viz. one motor for each section 14a to 14d. These motors 27 to 30 serve to drive the driving mechanism for the arrangement of brushes on each section, cf. the more detailed illustration found in Figure 4. This Figure 4 shows how such a motor 27 drives the individual brushes 8 of the brushing arrangement in alternate directions, viz. clockwise and counterclockwise, by means of pulleys 34, 36 and belt pulleys 35, cf. Figures 5 and 7.

Figures 5 and 6 show ejection means 31 arranged on the brush bottoms 2 of each brush 1. Figures 7 and 8 shown another type of ejection means 32 which is secured on the shafts 15 and project radially from said shafts. The ejection means 31, 32 serve to remove earth 33 cleaned off the beets 6, 7. This earth 33 is ejected from the surface of the table towards the side members 18 and leaves the apparatus 12 as a consequence of the distance between the lower edge of said side members and the table 14.

## Claims

1. Apparatus with rotating brushes (1) for cleaning beets (6, 7) of earth, characterised in that the apparatus (12) comprises a frame (13) with a substantially horizontal table (14), where a two-dimensional arrangement of upwardly pointed brushes (1) project from the surface of said table, said brushes being secured to upwardly extending and rotatably arranged shafts (15) at such intervals that the beets (6, 7) can both rest on the tips of the brushes (1) and enter the spaces (5) between said brushes (1) which are caused to rotate by means of driving means (27 to 30, 34, 35) connected to said shafts (15).

2. Apparatus as claimed in claim 1, characterised in that the driving means are adapted to rotate abutting brushes (1), which form a space (5) in such a manner that they do not all rotate in the same direction.

3. Apparatus as claimed in claim 2, characterised in that the brush arrangement forms such a pattern that each space is formed by three brushes, the shafts of which substantially form the vertices of an equilateral triangle.

4. Apparatus as claimed in claim 2 or 3, characterised in that the driving means (27 to 30, 34, 35) are arranged below the surface of the table (14).

5. Apparatus as claimed in claim 4, characterised in that the driving means are formed by chain drives surrounding sprockets on the shafts.

6. Apparatus as claimed in claim 4, characterised in that the driving means are formed by driving belts, especially toothed belts extending around toothed pulleys and belt pulleys, respectively, on the shafts.

7. Apparatus as claimed in claims 1 to 6, characterised in that the shafts and/or the brushes are provided with radially projecting ejection means (31, 32) for earth (33) cleaned off the beets (6, 7).

8. Apparatus as claimed in claims 1 to 7, characterised in that the table (14) is for instance rectangular and provided with upwardly projecting side members (18) along the long sides, said side members being spaced from the lower edge of the table (14), and a feeding chute (16) for beets to be cleaned at each end and an outlet chute (17) for cleaned beets.

9. Apparatus as claimed in claims 1 to 8, characterised in that the frame (13) above the brushes (1) comprises brushing means (8) facing said brushes (1) and being able to be kept in contact with the top side of the beets (6, 7), where said brushing means (7) are moved by means of a moving mechanism (19) into contact with the beets during the movement of said beets in a direction from the feeding chute (16) towards the outlet chute (17), whereafter the moving mechanism (19) lifts said brushing means (8) and moves them in an opposite direction out of contact with said beets (6, 7) so as subsequently to lower said brushing means (8) again into contact with the beets and so as to move them in the moving direction of said beets.

10. Apparatus as claimed in claim 9, characterised by providing the movement of the brushing means (8) in contact with the beets (6, 7) in the moving direction of said beets and the following lifting and returning in opposite direction as well as lowering into contact with the beets and moving in the moving direction of said beets by means of a power-driven eccentric mechanism (19).
